# EUROPÄISCHE PATENTSCHRIFT

(11) **EP 3 077 669 B1**
(45) Veröffentlichungstag und Bekanntmachung des Hinweises auf die Patenterteilung: **07.02.2018**
(21) Anmeldenummer: 14815266.3
(22) Anmeldetag: 01.12.2014
(51) Int. Cl.: F03D 13/00

(54) **VERFAHREN ZUM OPTISCHEN ERFASSEN EINER WINDKRAFTANLAGE ZU PRÜFZWECKEN MIT HILFE EINES LUFTFAHRZEUGS**
METHOD FOR OPTICALLY DETECTING A WIND TURBINE FOR TESTING PURPOSES USING AN AIRCRAFT
PROCÉDÉ POUR L'EXAMEN OPTIQUE D'UNE INSTALLATION ÉOLIENNE EN VUE DU CONTRÔLE AU MOYEN D'UN VÉHICULE AÉRIEN

(30) Priorität: 02.12.2013 DE 102013113326
(43) Veröffentlichungstag der Anmeldung: 12.10.2016
(73) Patentinhaber: Rolawind GmbH, 45481 Mülheim a.d. Ruhr (DE)
(72) Erfinder: ZELL, Horst, 45481 Mühlheim an der Rhur (DE)
(74) Vertreter: Henseler, Daniela
(86) Internationale Anmeldenummer: PCT/EP2014/076114
(87) Internationale Veröffentlichungsnummer: WO 2015/082405

(56) Entgegenhaltungen:
- EP-A1- 2 527 649
- DE-A1-102008 053 928
- DE-B3-102011 118 833
- US-A1- 2010 103 260
- US-A1- 2012 136 630

## Beschreibung

Die Erfindung betrifft ein Verfahren zum optischen Erfassen einer Windkraftanlage zu Prüfzwecken mit Hilfe eines Luftfahrzeuges, insbesondere einem registrierten oder zulassungspflichtigen Luftfahrzeug, vorzugsweise einem bemannten Drehflügler, insbesondere Hubschrauber, oder einem unbemannten Luftfahrzeug (z.B. UAV, unpiloted aeral vehicle), insbesondere unbemanntem Drehflügler. Die Windkraftanlage soll dabei in ihrem fertig montiertem Zustand verbleiben.

In der WO 2011/113402 A1 wird ein Verfahren zur baulichen Zustandsprüfung von Windkraftanlagen beschrieben, bei dem durch einen Hubschrauber die Rotorblätter einer Windkraftanlage nacheinander abgeflogen und optisch erfasst werden. Die aufgenommenen Bilder, insbesondere Wärmebilder, werden anschließend auf mögliche Beschädigungen des Rotorblatts hin untersucht.

Es hat sich allerdings gezeigt, dass bei der praktischen Durchführung dieses Prüfverfahrens Rahmenbedingungen vorhanden sind, die die Umsetzung erschweren, insbesondere bei recht großen Windkraftanlagen. Denn die Entwicklung geht derzeit hin zu Windkraftanlagen, die einen Rotordurchmesser von etwa 170 m aufweisen, wobei ein Ende des Größenwachstums noch nicht abzusehen ist. Ein Rotordurchmesser von 170 m bedeutet zugleich eine Rotorblattlänge von etwa 85 m. In der Figur 1 der WO 2011/113402 A1 ist zu erkennen, dass der Hubschrauber im wesentlichen frontal vor der gesamten Windkraftanlage steht. Es scheint, als ob die Windkraftanlage mit einer einzigen Aufnahme vollständig erfasst werden könnte. Bei einem Rotordurchmesser von etwa 170 m wäre allerdings ein recht großer Abstand erforderlich, um die Windkraftanlage bzw. das Rotorblatt vollständig mit einer einzigen Aufnahme optisch zu erfassen. Dann allerdings würde die Auflösung derzeitiger Kameras nicht ausreichen, um selbst kleine oder kleinste Beschädigungen von einer Größe von maximal 1 oder 2 mm aufzudecken.

Insofern ist es unumgänglich, dass der Hubschrauber einen gewissen Maximalabstand zur Rotorblatt nicht überschreitet, was wiederum es erforderlich macht, dass über ein sogenanntes Stiching-Verfahren die Einzelbilder wieder zusammengesetzt werden. Hier beginnen nun die Schwierigkeiten, denn es ist erforderlich eine Vielzahl von Einzelbildern aufzunehmen, wobei der Hubschrauber eine bestimmte Position gegenüber dem Rotorblatt einnehmen muss, damit die Aufnahmen verwertbar sind. Zugleich stellt sich aber auch ein Kostenproblem ein, da die Betriebsstunden eines Hubschraubers recht teuer sind und es daher eine Optimierung des Einsatzes des Hubschraubers bedarf. Dokument D1 offenbart ein ähnliches Verfahren zur Beobachtung eines Rotorblattes mit einem unbemannten Drehflügler. Die Erfindung schlägt nun vor, ein Verfahren zum optischen Erfassen einer Windkraftanlage für Prüfzwecken mithilfe eingangs genannten Luftfahrzeuges durchzuführen, an dem eine Kamera, insbesondere eine Wärmebildkamera, bevorzugt eine speziell gekühlte Kurzwellenwärmebildkamera installiert ist. Die Windkraftanlage umfasst mehrere Rotorblätter, deren Oberfläche im Rahmen des Verfahrens abgetastet wird. Das Abtasten erfolgt optisch, insbesondere mittels der Wärmebildkamera. Das Verfahren umfasst die folgenden Verfahrensschritte: Ausrichten eines ersten Rotorblatts in einer vertikalen Stellung, anschließend Abfliegen und Abtasten einer ersten Seite des ersten Rotorblatts in vertikaler Richtung, anschließend Abfliegen und Abtasten einer zweiten Seite des ersten Rotorblatts in vertikaler Stellung. Unter der ersten und der zweiten Seite ist jeweils die Druckseite bzw. die Zugseite des Rotorblattes gemeint, wobei es nicht darauf ankommt, welche Seite davon zuerst erfasst wird. Anschließend erfolgt das Ausrichten eines zweiten Rotorblattes in vertikaler Stellung. Anschließend erfolgt das Abfliegen und Abtasten einer ersten Seite des zweiten Rotorblattes in vertikaler Richtung und anschließend das Abfliegen und Abtasten einer zweiten Seite des zweiten Rotorblattes in vertikaler Richtung. Die Ausrichtung in vertikaler Richtung bedeutet dabei, dass eine Rotorblattachse des Rotorblattes vertikal ausgerichtet ist, insbesondere von der Nabe aus vertikal nach oben weisend. Nicht zu verwechseln ist die Rotorblattachse mit der Rotorachse. Die Rotorachse ist die im Wesentlichen horizontal ausgerichtete Achse, die durch die Lage der Gondel der Windkraftanlage definiert wird und zentral durch Nabe verläuft. Die Rotorblattachsen sind dann quer zu dieser Rotorachse ausgerichtet und drehen sich um die Rotorachse. Durch Verdrehen des Rotorblattes um die Rotorblattachse kann die Blattverstellung durchgeführt werden.
Die Energie von Lichtstrahlen, insbesondere Wärmestrahlen, die von außen auf die Rotorblätter auftreffen, teilen sich im Wesentlichen in drei Komponenten auf:
Reflexion: auftreffende Komponenten werden reflektiert. Reflektierte Lichtstrahlen haben keinen Aussaggehalt für Beschädigung im Inneren des Rotorblattes sondern verfälschen vielmehr den Aussagegehalt einer Wärmebildaufnahme.
Absorption. auftreffende Komponenten werden von der Oberfläche aufgenommen und vernichtet.
Transmission: auftreffende Komponenten dringen durch die Oberfläche hindurch und können innere Teile des Rotorblattes erreichen oder durchdringen vollständig das Rotorblatt.

Insbesondere der Anteil an Transmission ist für die Beurteilung der Rotorblätter von besonderer Bedeutung, da an innenliegenden Teilen des Rotorblattes die lokale Erwärmung gemessen werden kann, wodurch innere Beschädigungen erkennbar werden. Dies ist insbesondere bei solchen Anwendungen von Bedeutung, wenn der Wärmefluss gezielt von außen oder von innen auf das Rotorblatt aufgebracht wird, um lokale Erwärmungen gezielt herzustellen. Der Anteil der Transmission ist dann am größten, wenn eine solche Wärmestrahlung möglichst senkrecht auf die Oberfläche des Rotorblattes trifft.

So hat es sich herausgestellt, dass Aufnahmen aus ungeeigneten Standorten keine gute oder gar keine Aussagekraft besitzen. Ein zu flacher Winkel zwischen abzutastender Fläche und Aufnahmerichtung kann verfälschende Reflexionen hervorrufen. So werden in der Veröffentlichung von Peter Meinlschmidt und Jochen Aderhold "Thermographic inspection of rotor blades" aus dem Jahre 2006 Wärmebildaufnahmen an einer montierten Windkraftanlage vom Boden aus aufgenommen; aufgrund des steilen Aufnahmewinkels sind auf die Weise bezogene Aufnahmen nutzlos, da die Reflektion zu groß ist und allenfalls ein sehr geringer Anteil der empfangenen Lichtwellen tatsächlich aus dem Inneren des Rotorblattes stammt.

Der Kern der Erfindung liegt also insbesondere darin, das Rotorblatt zunächst vertikal auszurichten und anschließend beide Seiten des Rotorblattes in vertikaler Richtung abzufliegen und optisch abzutasten. Diese Vorgehensweise bewirkt insbesondere dann Vorteile, wenn als Luftfahrzeug ein Drehflügler, bemannt oder unbemannt, eingesetzt wird. So wird das Abfliegen der Rotorblätter lediglich durch eine kollektive Blattverstellung aller Rotorblätter des Drehflüglers gesteuert, was üblicherweise ein recht gleichmäßiges Ansteigen bzw. Absinken des Drehflüglers ermöglicht. Im Gegensatz dazu würde ein winklig ausgerichtetes Rotorblatt auch eine horizontale, schwer zu steuernde Bewegungskomponente des Drehflüglers erfordern. Insbesondere ein schräges Abfliegen ist für den Piloten recht schwierig durchzuführen, insbesondere unter der Maßgabe eines möglichst gleichmäßigen, ruhigen Fluges. Das Erfassen eines horizontal ausgerichteten Rotorblattes würde es zudem erforderlich machen, dass dieses Rotorblatt auch von der Rückseite anzufliegen wäre, also von der Turmseite. Dies ist aber unerwünscht, da der Turm eine Annäherung des Drehflüglers behindert. Alternativ könnte das Rotorblatt bei einer horizontalen Ausrichtung zwar so gestellt werden, dass es von unten bzw. von oben angeflogen werden könnte. Dann müsste allerdings durch den Rotor des Hubschraubers hindurch fotografiert werden (bei einem Anfliegen von unten); zudem müsste die Kamera einem anderen Schritt nach unten ausgerichtet sein um die andere Seite zu erfassen, was entweder zwei unterschiedliche Kameras bedingt oder ein Umschwenken der Kamera erforderlich machen würde. Die Alternativen zur vertikalen Ausrichtung sind also allesamt mit erheblichen Nachteilen verknüpft, die durch die vertikale Ausrichtung obsolet werden.

In der erfindungsgemäß vorgeschlagenen Ausrichtung ist es so also möglich, durch Abfliegen zunächst des einen Rotorblattes und anschließend direkt das Abfliegen des anderen Rotorblattes beide Seiten des Rotorblattes zu erfassen, ohne dass eine zeitaufwendige Umstellung des Rotorblattes oder der Kamera erforderlich wird. Anschließend wird das nächste Rotorblatt in die vertikal nach oben weisende Ausrichtung gebracht und abgeflogen und dabei optisch abgetastet. Insgesamt lässt sich so eine kostensparende (Flugzeitreduzierung) und zugleich hochwertige optische Erfassung der Windkraftanlagen realisieren.

Bevorzugt wird das Rotorblatt in einem steilen Aufnahmewinkel von in etwa 80° bis 100°, maximal 75° bis 105°, von beiden Seiten abgeflogen und abgetastet. Ein solcher Winkel ist bevorzugt, da dann der Anteil der Transmission von ggf. ausgesendeten Messstrahlen, z.B. Infrarotstrahlen, an Bereichen der Oberfläche optimiert wird. Akzeptabel sind ferner Aufnahmewinkel von 55° bis 125°. Die weiter unten angesprochenen Aufnahmewinkel recht nahe an 90° können in diesen Winkelbereichen ausgenommen werden.

Denn wenn sich ein zu flacher Winkel zwischen der Aufnahmerichtung und der Oberfläche des abzutastenden Rotorblattes insbesondere von mehr als 35° (Aufnahmewinkel kleiner als 65° bzw. größer als 125°) ergibt, so wird ein großer Anteil dieser Messstrahlen an der Oberfläche abprallen (Reflexion) und nicht in das Material eindringen. Bei sehr flachen Winkeln erscheint die Oberfläche nur noch wie ein großer Spiegel, da sich das Umgebungslicht spiegelt. Insofern ergibt sich die Notwendigkeit, die Oberflächen aus einer möglichst senkrechten Stellung abzutasten.

Bei einem Aufnahmewinkel recht nahe an 90° kann es zu Spiegeleffekten, insbesondere bei Verwendung einer Wärmbildkamera, führen. Insofern kann diesbezüglich ein Aufnahmewinkel von maximal 88° bzw. zumindest 92°, vorzugsweise maximal 85° bzw. zumindest 95°, weiter vorzugsweise maximal 80° bzw. zumindest 100° bevorzugt sein. Die weiter oben angegebenen Winkelbereiche können mit diesen Winkelbereichen kombiniert werden.

Bevorzugt werden dafür die Druckseite und die Zugseite des Rotorblattes, also im Wesentlichen die beiden großen Flächen des Rotorblattes, im Wesentlichen in einer Ebene ausgerichtet, die durch den Turm und die Rotorachse der Windkraftanlage aufgespannt wird. Im Wesentlichen ist dies die Ebene, in der dann auch die Rotorblattachse liegt. Mit seiner Rückkante ist das Rotorblatt dann insbesondere in Richtung Turm ausgerichtet, während es mit seiner Vorderkante vom Turm weg ausgerichtet ist.

Würde hingegen eine andere Ausrichtung des Rotorblattes gewählt werden, bei der z.B. die Zugseite oder die Druckseite des Rotorblattes zum Turm hin ausgerichtet wäre, so würde das Luftfahrzeug wiederum zu nahe an den Turm geraten, da dann eine Flugbahn in einer vertikalen Ebene erforderlich wäre, die hinter dem Turm (aus Sicht des Rotorblatts) angeordnet ist. Erfindungsgemäß hingegen ist nun vorgesehen, dass der Hubschrauber nun im Wesentlichen links und rechts parallel zum Turm fliegen kann, ohne dass der Turm hier eine Flugbahnbehinderung darstellt.

Vorzugsweise ist vorgesehen, dass die zur erfassenden Bereiche auf der Rotoroberfläche zumindest zweimal abgetastet werden, wobei. Das Luftfahrzeug ist bei jeder der beiden Abtastungen in unterschiedlichen Positionen gegenüber dem Rotorblatt angeordnet. Alternativ könnte das Luftfahrzeug auch zwei voneinander beabstandete Kameras aufweisen, so dass die erforderlichen Aufnahmen, insbesondere eine Art Stereobild, während einer einzigen Stellung des Luftfahrzeugs erzeugt wird. Dabei wird insbesondere der Aufnahmewinkel variiert gegenüber der anderen, vorherigen Aufnahme. Der Aufnahmewinkel ist dabei definiert durch den Winkel der Aufnahmerichtung gegenüber der Ebene, die durch die Oberfläche im zu erfassenden Bereich des Rotorblattes aufgespannt wird. Dieser Winkel soll grundsätzlich zwar möglichst senkrecht bei etwa 90° gegenüber der Rotorblattoberfläche liegen, um möglichst wenig Verfälschungen durch Reflexion zu generieren. Für die Variation bietet sich es an, hier Winkelabweichungen von maximal 15° vorzugsweise in etwa 10° zu verwenden. Insofern ist eine optimale Erfassung bei einem Aufnahmewinkel zwischen etwa 80° und 100° gegeben. Dies wird insbesondere dadurch erreicht, dass das Luftfahrzeug beim zweiten Abfliegen der selben Seite eine vertikale Flugbahn einnimmt, die in Längsrichtung versetzt ist zur vorherigen Flugbahn. Die Längsrichtung wird im Wesentlichen durch die Rotorachse definiert. Es erfolgt dabei also vorzugsweise ein zweimaliges Abfliegen auf jeder Seite, einmal vertikal hinauf und einmal vertikal hinunter. Beide Male sind die Aufnahmewinkel nun unterschiedlich zueinander. Spiegeleffekte können somit herausgefiltert werden. Denn ein Wärmebildartefakt, welches auf eine Beschädigung hinweist, muss auf beiden Aufnahmen gleichermaßen zu erkennen sein. Wärmebildartefakte, die zwar auf beiden Aufnahme zu erkennen sind, aber in jeweils unterschiedlichen Positionen, vorhanden sind, deuten auf Luftverwirbelungen hin, die sich ebenfalls in den Wärmebildern widerspiegeln können. Solche Luftverwirbelungen sind in der Regel durch Wind oder das Luftfahrzeug, insbesondere durch den Drehflügler, selbst bedingt. Ebenso kann der Abgasstrahl ein Wärmebildartefakt hervorrufen. Bei der zweiten Aufnahme sind solche "falschen" Artefakte dann nicht zu erkennen.

Während des Verfahrens werden eine Vielzahl von Teilaufnahmen des Rotorblattes erzeugt. Durch Stitching können diese Teileaufnahmen zu einem Gesamtbild zusammengefügt werden. Unter Stitching versteht man dabei insbesondere das Erstellen einer großen Abbildung aus mehreren kleineren Abbildungen was per Hand oder bevorzugt automatisiert mit einem Computerprogramm erfolgt.

Um das optische Erfassen der Windkraftanlage zu beschleunigen ist vorzugsweise vorgesehen, dass nach dem Abfliegen der zweiten Seite des ersten Rotorblattes ein Steuerbefehl insbesondere automatisch erzeugt wird, anhand dessen die Ausrichtung des zweiten Rotorblattes in die vertikale Stellung eingeleitet wird. Ein Solcher Steuerbefehl kann insbesondere über eine Datenverbindung zwischen dem Hubschrauber und der Steuereinheit der Windkraftanlage aufgebaut werden. Eine simple Form kann das Erzeugen und Versenden einer Kurznachricht per SMS oder Email sein, die an die Steuereinheit der Windkraftanlage gesendet wird. Auch eine Internetverbindung via Mobilfunk oder eine andere drahtlose Verbindung per Seefunk oder Sattelitenverbindung kann genutzt werden. Beispielsweise kann automatisch die Höhenangabe des Luftfahrzeugs herangezogen werden. Aufgrund des zweimaligen Abfliegens der vertikalen Flugbahnen, einmal hinauf und einmal hinab, kann dann erkannt werden, dass das Rotorblatt vollständig abgeflogen wurde. Basierend auf einem solchen Steuerbefehl wird dann veranlasst, dass das zweite Rotorblatt in die vertikale Stellung gebracht wird.

Vorzugsweise wird ein Abstand, insbesondere ein horizontaler Abstand, zwischen Windkraftanlage und dem Luftfahrzeug automatisiert überwacht. Für die optimale Auswertung der Bilder ist es erforderlich, einen optimalen Abstand einzunehmen. Zum einen soll die Windkraftanlage möglichst detailliert erfasst werden, was eine recht nahe Entfernung verlangt, zum anderen ist für die Sicherheit des Luftfahrzeugs zu sorgen, was einen gewissen Mindestabstand erfordert. Die Überwachung des Abstands hilft nun dabei, beides, nämlich die Qualität der Aufnahmen und die Flugsicherheit zu gewährleisten. Die Überwachung kann mittels eines Laserentfernungsmessgerätes erfolgen. Weicht der Ist-Abstand von einem vorgegebenen Soll-Abstand ab, so kann ein Warnsignal ausgegeben werden, welches dem Piloten die Abweichung signalisiert. Auch allgemein kann eine Abstandsmessung ein Eingangssignal für einen Autopiloten bilden, welcher eine vorgegebene Flugbahn im Rahmen des erfindungsgemäßen Verfahrens automatisch abfliegt.

Die Erfindung ist insbesondere anwendbar bei Windkraftanlagen umfassend eine ungerade Anzahl von Rotorblättern, insbesondere umfassend zumindest drei Rotorblätter. Bei solchen Rotorblättern befindet sich stets zumindest ein Rotorblatt in einer Stellung, die schwierig durch ein Luftfahrzeug, insbesondere Drehflügler, abgeflogen werden kann. Durch die beanspruchte Vorgehensweise können solche Windkraftanlagen möglichst effizient überprüft werden.

Die Erfindung wird anhand der Figuren nachfolgend näher erläutert, hierin zeigt
- Figur 1: eine Windkraftanlage, die von einem Helikopter abgeflogen und thermografisch erfasst wird;
- Figur 2: schematisch die Flugbahn des Hubschraubers während des Abfliegens;
- Figur 3: schematisch das Wärmebild eines optisch erfassten Rotorblattes, a) mit Helikopter bedingtem Artefakt b) ohne Helikopter bedingtem Artefakt.

Figur 4 schematisch die Ausrichtung des Hubschraubers während des Abfliegens des Rotorblattes von oben.

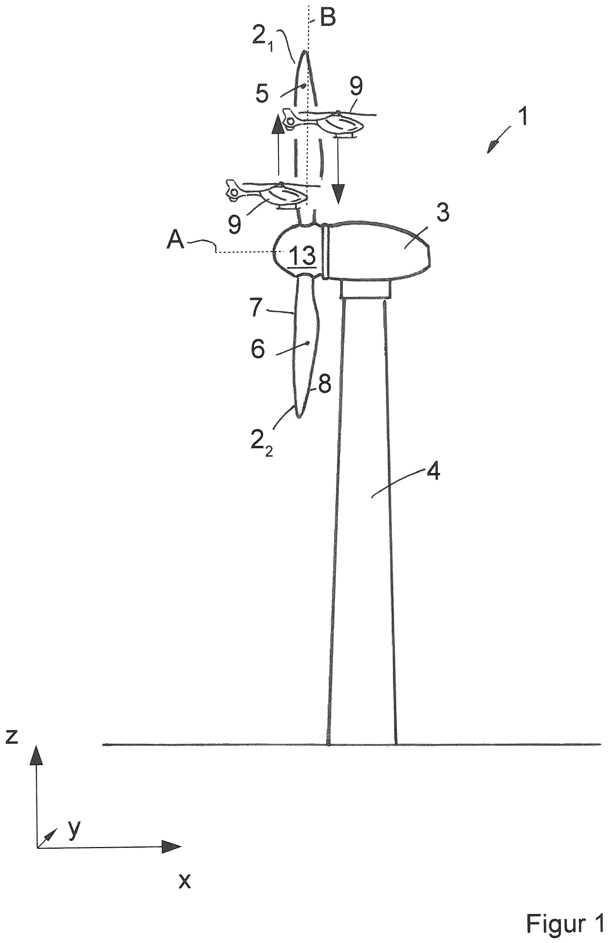

Figur 1 zeigt eine bekannte Windkraftanlage 1 mit einem Turm 4 und einer Gondel 3. An einer Nabe 13 sind eine Mehrzahl von Rotorblättern 2 befestigt, von dem nur zwei zu erkennen sind. Üblicherweise sind drei Rotorblätter vorhanden. Der Rotor, der die Rotorblätter 2 und die Nabe 13 umfasst, dreht sich um die Rotorachse A, welche im Wesentlichen horizontal ausgerichtet ist und je nach Stellung der Gondel um eine Hochachse, die durch den Turm 4 definiert ist, gedreht werden kann. Gegenüber der Nabe 13 können die Rotorblätter 2 wiederum um eine Rotorblattachse B verdreht werden. Zur Inspektion wird nun ein erstes Rotorblatt 2₁ vertikal ausgerichtet, so dass dessen Rotorblattachse B senkrecht nach oben weist. Nun fliegt ein Helikopter 9, an dem eine Wärmebildkamera installiert ist, sowohl die Druckseite 5 als auch die Zugseite 6 des Rotorblattes 2 nacheinander ab. Dabei ist jeweils ein Abfliegen nach vertikal unten und ein Abfliegen nach vertikal oben vorgesehen.

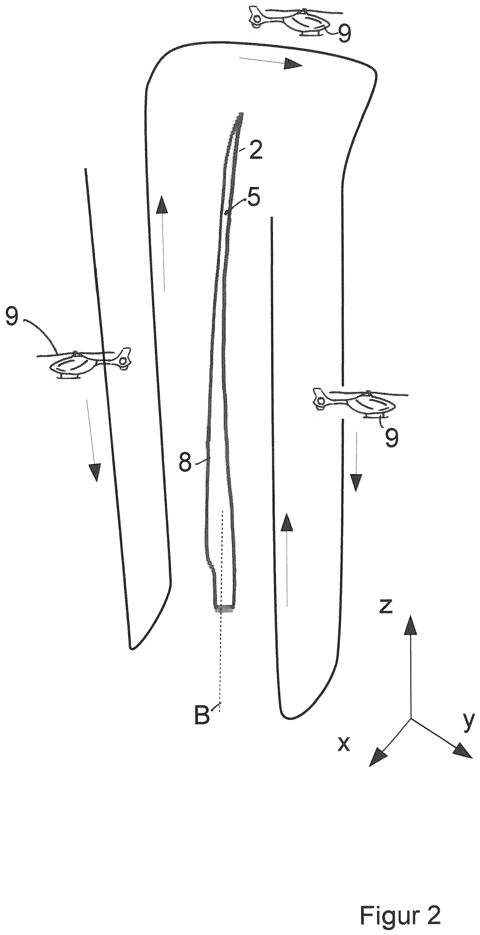

Näheres zur Flugbahn ergibt sich aus der Figur 2. Zu erkennen ist das Rotorblatt 2 mit dessen Zugseite 5. Zunächst positioniert sich der Helikopter 9 in einer Position in Höhe auf etwa der Blattspitze und fliegt dann nach vertikal unten in Richtung Nabe, etwa parallel zur Rotorblattachse B. Dann verlagert er seine Position in x-Richtung, so dass vom Hubschrauber aus das Rotorblatt von einer etwas anderen Winkelposition aus betrachtet werden kann. Dann fliegt der Hubschrauber wieder nach vertikal oben. Während des Abfliegens nimmt die Kamera eine Vielzahl von Wärmebildern auf. Anschließend wechselt der Hubschrauber 9 die Seite des Rotorblattes und fliegt von der Zugseite auf die Druckseite 5. Dort fliegt er ebenfalls zunächst das Rotorblatt vertikal von oben nach unten ab, anschließend wechselt er die Längsposition x und fliegt wieder nach oben. Ist er dann wieder oben angelangt, so kann er eine Art Parkposition einnehmen, je höher desto besser. Dann wird beispielsweise über Funk oder SMS ein Signal an eine Steuereinheit für die Windkraftanlage gesendet mit der Aufforderung, nun das nächste Rotorblatt in die vertikal nach oben weisende Stellung zu bringen. Dann erfolgt die Erfassung und das Abfliegen des nächsten Rotorblattes auf vorbeschriebene Weise, bis sämtliche Rotorblätter abgeflogen und optisch erfasst sind.

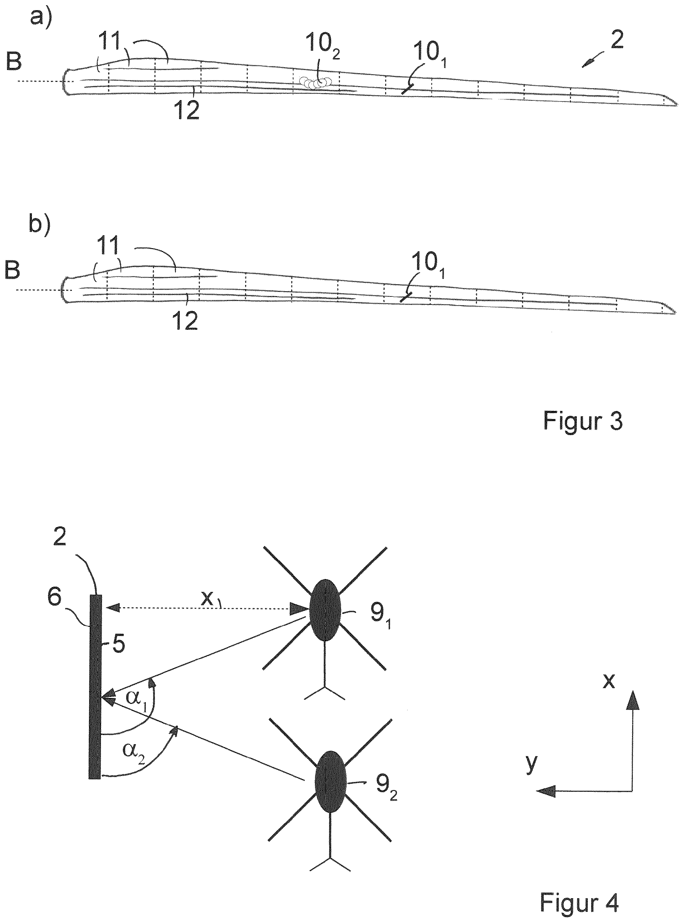

In Figur 3 ist das Wärmebild eines Rotorblattes 2 gezeigt, welches aus einer Vielzahl von Einzelaufnahmen 11, per Hand oder automatisiert, zusammengesetzt ist durch Stitching. Die Aufnahmen nach Figur 3a wurden aber in einer anderen Lateralposition aufgenommen als die Aufnahme nach Figur 3b. So ist in Figur 3a ein erstes Wärmebildartefakt 10₁ zu erkennen, welches auch in der Aufnahme nach Figur 3b zu erkennen ist. In beiden Bildern sind die ersten Wärmebildartefakte 10₁ jeweils in denselben Positionen angeordnet, trotz abweichender Aufnahmeposition. Insofern ist davon auszugehen, dass diese Wärmebildartefakt 10₁ auf Risse an dem gezeigten Rotorblatt 2 hinweisen. Ferner sind auch Tragstrukturen 12 zu erkennen, sowohl auf der Darstellung nach Figur 3a als auch auf der Darstellung nach Figur 3b. In Figur 3a ist ferner ein zweites Wärmebildartefakt 10₂ zu erkennen. Die ist allerdings nicht auf der Darstellung nach Figur 3b zu erkennen. Da dies nicht auf der zweiten Darstellung zu erkennen ist, deutet es folglich nicht auf eine Beschädigung hin. Es hat sich herausgestellt, dass dies das Wärmebild eines Abgasstromes des Helikopters ist.

Figur 4 zeigt die Ausrichtung des Hubschraubers 9 während des Abfliegens des Rotorblattes in unterschiedlichen Längspositionen. Zunächst fliegt der Hubschraube 9₁ das Rotorblatt 2 (vereinfacht dargestellt in einem horizontalen nicht maßstabsgetreuen Querschnitt) derart ab, so dass sich ein Aufnahmewinkel α₁ von etwa 100° ergibt. Beim zweiten Mal fliegt der Hubschrauber 9₂ das Rotorblatt 2 so ab, so dass sich ein Aufnahmewinkel α₂ von etwa 80° ergibt.

Mithilfe eines nicht näher dargestellten Laserabstandsmessgeräts wird ständig eine Entfernung x des Hubschraubers 9 von dem Rotorblatt 2 ermittelt. Sollte der Hubschrauber dem Rotorblatt zu nahe kommen, wird eine Sicherheitswarnung (z.B. akustisch oder optisch) ausgegeben, die den Piloten vor einer möglichen Kollision warnt. Wird der Abstand x zu groß, so kann sich die Aussagekraft der erzeugten Bilder verringern. Auch dies wird dem Piloten mittels eines Warnsignals signalisiert.

### Bezugszeichenliste

- 1: Windkraftanlage
- 2: Rotorblatt
- 3: Gondel
- 4: Turm
- 5: Zugseite
- 6: Druckseite
- 7: Vorderkante
- 8: Rückkante
- 9: Hubschrauber
- 10: Artefakt
- 11: Einzelaufnahme
- 12: Tragstruktur
- 13: Nabe

- A: Rotorachse
- B: Rotorblattachse
- α: Aufnahmewinkel
- x: horizontaler Abstand

## Patentansprüche

1. Verfahren zum optischen Erfassen einer Windkraftanlage (1) zu Prüfzwecken mit Hilfe eines Luftfahrzeuges, insbesondere eines bemannten oder unbemannten Drehflüglers (9), an dem zumindest eine Kamera installiert ist, wobei die Windkraftanlage mehrere Rotorblätter (2) umfasst, deren Oberfläche im Rahmen des Verfahrens abgetastet wird, wobei das Abtasten optisch erfolgt, umfassend die folgenden Verfahrensschritte:
Ausrichten eines ersten Rotorblattes (2₁) in einer vertikalen Stellung,
anschließend Abfliegen und Abtasten einer ersten Seite (5) des ersten Rotorblattes (2₁) in vertikaler Richtung,
abschließend Abfliegen und Abtasten einer zweiten Seite (6) des ersten Rotorblattes (2₁) in vertikaler Richtung,
anschließend Ausrichten eines zweiten Rotorblattes (2₂) in einer vertikalen Stellung, anschließend Abfliegen und Abtasten einer ersten Seite (5) des zweiten Rotorblattes (2₂) in vertikaler Richtung,
anschließend Abfliegen und Abtasten einer zweiten Seite (6) des zweiten Rotorblattes (2₂) in vertikaler Richtung.

2. Verfahren nach dem vorherigen Anspruch,
**dadurch gekennzeichnet,**
eine Rotorblattachse (B) des abzutastende Rotorblatt (2) während der Abtastung vertikal nach oben weisend ausgerichtet ist.

3. Verfahren nach einem der vorherigen Ansprüche,
**dadurch gekennzeichnet,**
**dass** das abzutastende Rotorblatt (2) so ausgerichtet wird, dass eine Druckseite (5) und eine Zugseite (6) des Rotorblattes im Wesentlichen parallel zu einer Ebene liegen, die durch den Turm (4) eine Rotorachse (A) der Windkraftanlage aufgespannt wird.

4. Verfahren nach einem der vorherigen Ansprüche,
**dadurch gekennzeichnet,**
**dass** die zu erfassenden Bereiche (5, 6) auf der Rotoroberfläche zumindest zweimal abgetastet werden, wobei die Kamera bzw. Kameras und/oder das Luftfahrzeug (9) bei jeder der beiden Abtastungen in unterschiedlichen Positionen gegenüber dem Rotorblatt angeordnet sind.

5. Verfahren nach einem der vorherigen Ansprüche,
**dadurch gekennzeichnet,**
**dass** während des Abtastens das Abfliegen der Seite der Rotorblätter zunächst in einer vertikalen Richtung und anschließend in der entgegengesetzten vertikalen Richtung erfolgt.

6. Verfahren nach einem der vorherigen Ansprüche,
**dadurch gekennzeichnet,**
**dass** eine Vielzahl von Teilaufnahmen des Rotorblattes (2) erzeugt werden, welche, insbesondere durch Stitching, zu einer Gesamtaufnahme zusammengeführt werden.

7. Verfahren nach einem der vorherigen Ansprüche,
**dadurch gekennzeichnet,**
**dass** nach dem Abfliegen der zweiten Seite des ersten Rotorblattes ein Steuerbefehl, insbesondere automatisch, erzeugt wird, anhand dessen die Ausrichtung des zweiten Rotorblattes in die vertikale Stellung eingeleitet wird.

8. Verfahren nach einem der vorherigen Ansprüche,
**dadurch gekennzeichnet,**
**dass** ein Abstand (x), insbesondere ein horizontaler Abstand, zwischen der Windkraftanlage oder dem Rotorblatt und dem Luftfahrzeug automatisiert überwacht wird.

## Claims

1. Method for optically detecting a wind turbine (1) for inspection purposes by means of an aircraft, in particular a manned or unmanned rotorcraft (9), which has at least one camera installed thereon, wherein the wind turbine comprises a plurality of rotor blades (2), the surface of which is scanned in the course of the method, wherein the scanning is carried out optically, comprising the following method steps:
orienting a first rotor blade (2₁) in a vertical position,
subsequently flying along and scanning a first side (5) of the first rotor blade (2₁) in vertical direction,
subsequently flying along and scanning a second side (6) of the first rotor blade (2₁) in vertical direction,
subsequently orienting a second rotor blade (2₂) in a vertical position,
subsequently flying along and scanning a first side (5) of the second rotor blade (2₂) in vertical direction,
subsequently flying along and scanning a second side (6) of the second rotor blade (2₂) in vertical direction.

2. Method according to the preceding claim,
**characterized**
**in that** a rotor blade axis (B) of the rotor blade (2) to be scanned is oriented pointing vertically upward during the scanning.

3. Method according to one of the preceding claims,
**characterized**
**in that** the rotor blade (2) to be scanned is oriented in such a way that a compression side (5) and a tension side (6) of the rotor blade lie substantially parallel to a plane which is spanned by the tower (4) a rotary axis (A) of the wind turbine.

4. Method according to one of the preceding claims,
**characterized**
**in that** the regions (5, 6) to be detected on the rotor surface are scanned at least twice, wherein the camera or cameras and/or the aircraft (9) are arranged at different positions in relation to the rotor blade at each one of the two scans.

5. Method according to one of the preceding claims,
**characterized**
**in that** the flying along the side of the rotor blades during the scanning is initially carried out in one vertical direction and subsequently carried out in the opposite vertical direction.

6. Method according to one of the preceding claims,
**characterized**
**in that** a multiplicity of partial recordings of the rotor blade (2) are generated, said partial recordings being combined to an overall recording, in particular by way of stitching.

7. Method according to one of the preceding claims,
**characterized**
**in that**, after flying along the second side of the first rotor blade, a control command is generated, in particular automatically, on the basis of which the orientation of the second rotor blade into the vertical position is initiated.

8. Method according to one of the preceding claims,
**characterized**
**in that** a distance (x), in particular a horizontal distance, between the wind turbine or the rotor blade and the aircraft is monitored in an automated manner.

## Revendications

1. Procédé servant à détecter de manière optique une éolienne (1) à des fins de contrôle à l'aide d'un aéronef, en particulier d'un giravion (9) avec pilote ou sans pilote, au niveau duquel au moins une caméra est installée, dans lequel l'éolienne comprend plusieurs pales de rotor (2), dont la surface est balayée dans le cadre du procédé, dans lequel le balayage est effectué de manière optique, comprenant les étapes de procédé qui suivent consistant à:
orienter une première pale de rotor (2₁) dans une position verticale,
puis survoler et balayer un premier côté (5) de la première pale de rotor (2₁) dans une direction verticale,
puis survoler et balayer un deuxième côté (6) de la première pale de rotor (2₁) dans une direction verticale,
puis orienter une deuxième pale de rotor (2₂) dans une position verticale,
puis survoler et balayer un premier côté (5) de la deuxième pale de rotor (2₂) dans une direction verticale,
puis survoler et balayer un deuxième côté (6) de la deuxième pale de rotor (2₂) dans une direction verticale.

2. Procédé selon la revendication précédente,
**caractérisé en ce**
**qu'**un axe de pale de rotor (B) de la pale de rotor (2) à balayer est orienté de manière à pointer verticalement vers le haut au cours du balayage.

3. Procédé selon l'une quelconque des revendications précédentes,
**caractérisé en ce**
**que** la pale de rotor (2) à balayer est orientée de telle sorte qu'un côté pression (5) et un côté traction (6) de la pale de rotor sont sensiblement parallèles à un plan, qui est formé par la tour (4) et un axe de rotor (A) de l'éolienne.

4. Procédé selon l'une quelconque des revendications précédentes,
**caractérisé en ce**
**que** les zones (5, 6) à détecter sont balayées sur la surface de rotor au moins à deux reprises, dans lequel la caméra ou les caméras et/ou l'aéronef (9) sont disposés à chacun des deux balayages dans des positions différentes par rapport à la pale de rotor.

5. Procédé selon l'une quelconque des revendications précédentes,
**caractérisé en ce**
**qu'**au cours du balayage, le survol du côté des pales de rotor est effectué dans un premier temps dans une direction verticale puis immédiatement après dans la direction verticale opposée.

6. Procédé selon l'une quelconque des revendications précédentes,
**caractérisé en ce**
**qu'**est générée une pluralité de logements partiels de la pale de rotor (2), lesquels sont réunis, en particulier par assemblage, en un logement global.

7. Procédé selon l'une quelconque des revendications précédentes,
**caractérisé en ce**
**qu'**après le survol du deuxième côté de la première pale de rotor, une instruction de commande est générée en particulier de manière automatique, à l'aide de laquelle l'orientation de la deuxième pale de rotor dans la position verticale est initiée.

8. Procédé selon l'une quelconque des revendications précédentes,
**caractérisé en ce**
**qu'**une distance (x), en particulier une distance horizontale, entre l'éolienne ou la pale de rotor et l'aéronef est surveillée de manière automatisée.
